# EUROPEAN PATENT APPLICATION

(11) **EP 4 708 667 A1**
(43) Date of publication of application: **11.03.2026**
(21) Application number: 25200436.1
(22) Date of filing: 05.09.2025
(51) Int. Cl.: H02P 6/08, H02P 23/14, H02P 27/04

(54) **CLOUD MOTOR AND CONTROL METHOD FOR CLOUD MOTOR**

(30) Priority: 06.09.2024 CN 202411245962
(71) Applicant: Zhuhai Geelly Technology CO., LTD., Zhuhai City Guangdong 519040 (CN)
(72) Inventor: ZHU, Dongzhu, Zhuhai City, 519040 (CN); ZHU, Shaowu, Zhuhai City, 519040 (CN); LIANG, Guangzhen, Zhuhai City, 519040 (CN); SHI, Shuang, Zhuhai City, 519040 (CN); HUANG, Yongjun, Zhuhai City, 519040 (CN)
(74) Representative: J A Kemp LLP

(57) **Abstract**

The present application provides a cloud motor and a control method for the cloud motor, which relates to the field of motors. A motor body of the cloud motor is connected to a driver through a power cable; the driver is configured to send a driving instruction to the motor body; the motor body includes an induction coil provided on a stator winding, a head and a tail of the induction coil are both electrically connected to the controller, and the induction coil is configured to generate an induced alternating current when the motor body rotates and transmit the induced alternating current to the controller; the controller is configured to convert the induced alternating current into a direct current so as to supply power to modules inside the controller; and the controller is configured to determine a real-time rotational speed of the motor body according to an alternating frequency of the induced alternating current, and transmit the real-time rotational speed to the driver; and the driver is further configured to modify the driving instruction according to the received real-time rotational speed, and send the modified driving instruction to the motor body. The cloud motor of the present application can avoid the installation disorder and data transmission interference caused by the long-distance power cable on the motor by self-power generation.

## Description

### TECHNICAL FIELD

The present application relates to the field of motors, and in particular, to a cloud motor and a control method for the cloud motor.

### BACKGROUND

With the advancement of industry and intelligent manufacturing, traditional devices are facing a demand for intelligent upgrading. In the related art, the intelligent control of a motor, such as a servo motor, is mostly implemented by providing various sensors on the device.

The servo motor includes a motor body, a driver and an encoder, where the driver is connected to a power supply through a power cable, and is connected to the motor body through the power cable, and the encoder is connected to the driver through the power cable and a data cable. In addition, an inner ring of the encoder is mounted on a motor shaft at a rear end of the motor, and an outer ring of the encoder is fixed on a rear end cover of the motor. When the driver sends a driving instruction to the motor body through the power cable, the motor body rotates according to the driving instruction, and the encoder drives the inner ring of the encoder to rotate through the rotation of the motor shaft, and the generated real-time rotation data of the motor is fed back to the driver through the data cable. The driver modifies the driving instruction in time according to the data fed back by the encoder, so as to achieve the closed-loop control of the servo motor that is from the driver to the motor body, from the motor body to the encoder, from the encoder to the driver, and from the driver back to the motor body.

For the above-mentioned servo motor, there is usually a certain distance between the driver and the motor body, the driver is generally provided in a power distribution room, while sensors such as the encoder are provided near the motor body. Since the power cable between the driver and the motor body cannot supply power to other structures, the sensors such as the encoder have to be additionally connected to a long-distance power cable from the power distribution room or the driver, so that the installation of the motor becomes very disordered, and the long-distance power cable may also interfere with the data transmission of the motor.

### SUMMARY

The present application provides a cloud motor and a control method for the cloud motor, aiming to solve the technical problems of installation disorder and data transmission interference caused by the long-distance power cable on the motor.

According to a first aspect, the present application provides a cloud motor, including: a motor body, a controller, and a driver, where the motor body is connected to the driver through a power cable;
the driver is configured to send a driving instruction to the motor body, and the driving instruction is used to instruct the motor body to rotate according to a preset rotational speed;
the motor body includes an induction coil provided on a stator winding, a head and a tail of the induction coil are both electrically connected to the controller, and the induction coil is configured to generate an induced alternating current when the motor body rotates and transmit the induced alternating current to the controller;
the controller is configured to convert the induced alternating current into a direct current so as to supply power to modules inside the controller; and determine a real-time rotational speed of the motor body according to an alternating frequency of the induced alternating current, and transmit the real-time rotational speed to the driver; and
the driver is further configured to modify the driving instruction according to the received real-time rotational speed, and send the modified driving instruction to the motor body.

In a possible embodiment, the controller includes a power module, a rectification module and an alternating-frequency conversion module, where the power module is electrically connected to the induction coil, and the power module is electrically connected to the rectification module and the alternating-frequency conversion module, respectively;
the power module is configured to transmit the induced alternating current to the rectification module and the alternating-frequency conversion module, respectively;
the rectification module is configured to convert the received induced alternating current into the direct current, and use the direct current to supply power to the controller, or to supply power to the controller and an alternating-current electric device connected to the rectification module; and
the alternating-frequency conversion module is configured to determine the real-time rotational speed of the motor body according to the alternating frequency of the received induced alternating current, and transmit the real-time rotational speed to the driver, so as to achieve a closed-loop control of the cloud motor.

In a possible embodiment, the controller further includes a data transceiver module, the data transceiver module is electrically connected to the alternating-frequency conversion module, the data transceiver module is further in a communication connection with a cloud server/upper computer, both of which are in a communication connection with the driver; and
the alternating-frequency conversion module is specifically configured to transmit the real-time rotational speed to the cloud server/upper computer through the data transceiver module, and the cloud server/upper computer sends the real-time rotational speed to the driver.

In a possible embodiment, the alternating-frequency conversion module and the data transceiver module are further respectively electrically connected to the rectification module, and the rectification module is configured to supply power to the alternating-frequency conversion module and the data transceiver module.

In a possible embodiment, the cloud motor further includes a plurality of sensors, the plurality of sensors are each electrically connected to the rectification module, and the rectification module is further configured to supply power to the plurality of sensors, respectively; and
the plurality of sensors are each also in communication connection with the cloud server/upper computer, and the plurality of sensors are configured to upload collected data to the cloud server/upper computer.

In a possible embodiment, the alternating-frequency conversion module is further connected to the driver through a first data cable, and the alternating-frequency conversion module is specifically configured to transmit the real-time rotational speed to the driver through the first data cable.

In a possible embodiment, the controller further includes a display module, the display module is connected to the alternating-frequency conversion module through a second data cable, the display module is further electrically connected to the rectification module, and the rectification module is further configured to supply power to the display module; and
the display module is configured to receive and display the real-time rotational speed transmitted by the alternating-frequency conversion module through the second data cable.

In a possible embodiment, the motor body further includes a rotor and a stator provided around an outer side of the rotor, where the stator includes a plurality of groups of stacked silicon steel sheets, and a stator winding is wound around an outer periphery of each group of silicon steel sheets; and
the induction coil is wound on one or more stator windings, and a wire diameter and a quantity of turns of the induction coil are both positively correlated with the current generated by the induction coil.

In a possible embodiment, when there is only one induction coil, the one induction coil is wound on one stator winding; and
when there are a plurality of induction coils, each induction coil is wound on one stator winding, and the plurality of induction coils are connected in series, where a quantity of the induction coils is positively correlated with the current generated by the induction coils, and does not exceed a quantity of the stator windings.

According to a second aspect, the present application provides a control method for the cloud motor, applied to the controller of the cloud motor, the method including:
receiving the induced alternating current generated by the induction coil on the motor body;
converting the induced alternating current into a direct current so as to supply power to the modules inside the controller; and determining the real-time rotational speed of the motor body according to the alternating frequency of the induced alternating current, and transmitting the real-time rotational speed to the driver.

According to the cloud motor and the control method for the cloud motor provided in the present application, the cloud motor may include: a motor body, a controller and a driver, where the motor body is connected to the driver through a power cable; the driver is configured to send a driving instruction to the motor body, and the driving instruction is used to instruct the motor body to rotate according to a preset rotational speed; the motor body includes an induction coil provided on a stator winding, a head and a tail of the induction coil are both electrically connected to the controller, and the induction coil is configured to generate an induced alternating current when the motor body rotates, and transmit the induced alternating current to the controller; the controller is configured to convert the induced alternating current into a direct current so as to supply power to modules inside the controller; and determine a real-time rotational speed of the motor body according to an alternating frequency of the induced alternating current, and transmit the real-time rotational speed to the driver; and the driver is further configured to modify the driving instruction according to the received real-time rotational speed, and send the modified driving instruction to the motor body. The cloud motor in the present application eliminates a traditional encoder structure and uses the controller to determine the real-time rotational speed of the motor body and transmits it to the driver, so that the driver can modify the driving instruction according to the received real-time rotational speed, and send the modified driving instruction to the motor body, so as to achieve the closed-loop control of the motor body. Further, the induction coil has been added to the stator winding in the cloud motor, the induction coil can generate the induced alternating current when the motor body rotates and the induced alternating current is transmitted to the controller, and the controller can convert the induced alternating current into the direct current so as to supply power to the modules inside the controller. By means of such an arrangement, the power supply problem of the controller can be solved without providing a long-distance power cable between the controller and the driver, thereby avoiding the problems of the installation disorder and data transmission interference caused by the long-distance power cable on the motor. Still further, the controller may also determine the real-time rotational speed of the motor body according to the alternating frequency of the induced alternating current, so as to replace the function of the encoder and realize accurate monitoring of the motor body, thereby enabling the driver to modify the driving instruction according to the real-time rotational speed of the motor body, and achieving the closed-loop control that is from the driver to the motor body, from the motor body to the controller, and from the controller to the driver.

### BRIEF DESCRIPTION OF THE DRAWINGS

The accompanying drawings herein, which are incorporated into the description and form part of the description, illustrate embodiments in accordance with the present application and are used together with the description to explain the principles of the present application.
FIG. 1 is a schematic structural diagram of a servo motor in the prior art.
FIG. 2 is a schematic structural diagram of a cloud motor according to an embodiment of the present application.
FIG. 3 is a schematic structural diagram of a motor body according to an embodiment of the present application.
FIG. 4 is a flowchart of a control method for the cloud motor according to an embodiment of the present application.

Reference numerals: 1, motor body; 101, stator; 102, rotor; 103, rotor magnet; 104, front end cover; 105, rear end cover; 2, driver; 3, encoder; 4, power supply; 51, first power cable; 52, second power cable; 53, third power cable; 6, data cable; 7, controller; 71, power module; 72, rectification module; 73, alternating-frequency conversion module; 74, data transceiver module; 75, display module; 8, power cable; 9. connection wire; 10, upper computer; 11, sensor; 12, stator winding; 13, induction coil; 14, silicon steel sheet.

Through the above accompanying drawings, specific embodiments of the present application have been shown, and will be described in more detail in the following. The accompanying drawings and the description are not intended to limit the scope of the present application in any way, but rather to illustrate the concepts of the present application to those skilled in the art by referring to specific embodiments.

### DESCRIPTION OF EMBODIMENTS

The exemplary embodiments will be described in detail herein, with examples shown in the accompanying drawings. When referring to the accompanying drawings, unless otherwise indicated, the same numbers in different drawings represent the same or similar elements. The embodiments described in the following exemplary embodiments do not represent all embodiments consistent with the present application. On the contrary, they are merely examples of apparatus and methods consistent with some aspects of the present application as detailed in the appended claims.

It should be noted that, the cloud motor and the control method for the cloud motor of the present application may be used in the field of motors, and may also be used in any field except the field of motors, such as the field of intelligent manufacturing. The application fields of the cloud motor and the control method for the cloud motor in the present application are not limited.

The cloud motor and the control method for the cloud motor of the present application can be applied to a scenario where an electric motor is used to drive a device, for example, rotation, transmission and other any relevant scenario involving the conversion of electrical energy into mechanical energy using the electric motor can be applied to the cloud motor and the control method for the cloud motor of the present application.

Firstly, the terms involved in the present application are explained in the below.

Motor: the motor referred to in the present application refers to an electric motor (commonly known as Motor), which is a device that converts the electrical energy into the mechanical energy. It uses an energized coil (i.e., a stator winding) to generate a rotating magnetic field, that acts on a rotor (such as a squirrel-cage type closed aluminum frame, a squirrel cage + a permanent magnet, and a permanent magnet) to form a magneto-electric dynamic rotational torque. The electric motors can be divided into a direct-current electric motor and an alternating-current electric motor according to different power supplies in use, and most of the electric motors in an electric power system are alternating-current electric motors, which can be synchronous motors or asynchronous motors (a rotational speed of a stator magnetic field of the motor is not synchronous with a rotational speed of a rotor). The electric motor is mainly composed of a stator and a rotor, where the stator is a stationary part in the motor and is mainly composed of three parts: a stator core, a stator winding and a frame, and a main function of the stator is to generate the rotating magnetic field; and the rotor refers to a rotational part in the motor, and a rotation manner thereof is that a core at the center of the motor acts as a rotational body to output a torque, and a main function of the rotor is to be cut by magnetic field lines in the rotating magnetic field to generate (output) a current.

Driver: it is the key for controlling the start, stop and operation of the motor, and changes the physical quantities generated by the motor such as torque, speed and position by changing the magnitude, direction and frequency of current in the motor winding.

Upper computer: it refers to a computer that can directly send a manipulation command, and generally, an industrial personal computer, a workstation, a touch screen, etc., can serve as upper computers. A lower computer is a computer that directly controls a device to acquire a status of the device, and is generally a PLC, a single-chip microcomputer or the like.

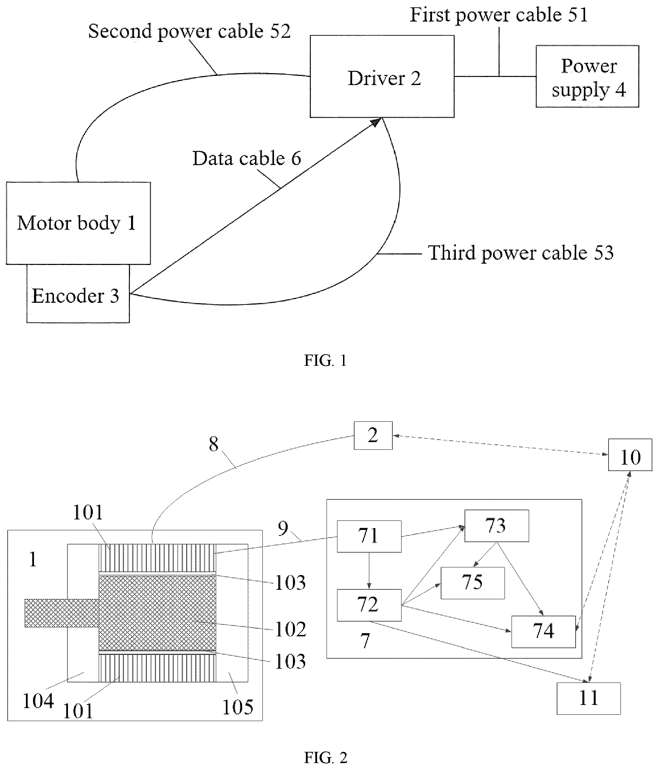

FIG. 1 is a schematic structural diagram of a servo motor in the prior art. As shown in FIG. 1, the servo motor includes a motor body 1, a driver 2 and an encoder 3, where the driver 2 is connected to a power supply 4 through a first power cable 51, and is connected to the motor body 1 through a second power cable 52, and the encoder 3 is connected to a low voltage power supply in the driver 2 through a third power cable 53. In addition, an inner ring of the encoder 3 is mounted to a motor shaft at a rear end of the motor body 1, an outer ring of the encoder 3 is fixed to a rear end cover of the motor body 1, and the encoder 3 is further connected to the driver 2 through a data cable 6. When the driver 2 sends a driving instruction to the motor body 1 to enable the motor body 1 to rotate according to the driving instruction, the encoder 3 is driven by the rotation of the motor to rotate to collect an actual rotational speed of the motor body 1, and feeds back the actual rotational speed of the motor body 1 to the driver 2 through the data cable 6. The driver 2 modifies the driving instruction in time according to data fed back by the encoder 3, so as to achieve a closed-loop control of the servo motor that is from the driver 2 to the motor body 1, from the motor body 1 to the encoder 3, from the encoder 3 to the driver 2, and from the driver 2 back to the motor body 1.

For the above-mentioned servo motor, there is usually a certain distance between the driver and the motor body, the driver is generally provided in a power distribution room, while sensors such as the encoder are provided on or near the motor body. Since the power cable between the driver and the motor body cannot supply power to other structures, the sensors such as the encoder have to be additionally connected to a long-distance power cable from the power distribution room or the driver, so that the installation of the motor becomes very disordered, and the long-distance power cable may also interfere with the data transmission of the motor.

Based on the above technical problem, the inventive concept of the present application is how to provide a cloud motor that can avoid installation disorder and data transmission interference caused by the long-distance power cable.

The embodiments of the present application provide a cloud motor and a control method for the cloud motor, where a controller is used to replace a conventional encoder structure and an induction coil is added to a stator winding of the motor. By means of an induction coil that generates an induced alternating current when the motor body rotates, self-power generation can be realized, so as to supply power to various modules in the controller. This eliminates the need to provide the long-distance power cable for the controller, thereby avoiding the installation disorder and data transmission interference caused by the long-distance power cable on the motor. In addition, the controller can also determine a real-time rotational speed of the motor body according to an alternating frequency of the induced alternating current, so that the controller has a function of the encoder, and may achieve a closed-loop control from the driver to the motor body, from the motor body to the controller, and from the controller to the driver.

The technical solutions of the present application and how the technical solutions of the present application solves the above technical problem will be described in detail below with reference to specific embodiments. The following specific embodiments may be combined with each other, and the same or similar concepts or processes may not be repeated in certain embodiments. The embodiments of the present application will be described below in conjunction with the accompanying drawings.

FIG. 2 is a schematic structural diagram of a cloud motor according to an embodiment of the present application. As shown in FIG. 2, the cloud motor may include: a motor body 1, a controller 7, and a driver 2, where the motor body 1 is connected to the driver 2 through a power cable 8.

The driver 2 may be configured to send a driving instruction to the motor body 1, and the driving instruction is configured to instruct the motor body 1 to rotate according to a preset rotational speed.

The motor body 1 may include an induction coil 13 provided on a stator winding 12, a head and a tail of the induction coil 13 are both electrically connected to the controller 7, and the induction coil 13 may be configured to generate an induced alternating current when the motor body 1 rotates and transmit the induced alternating current to the controller 7.

The controller 7 may be configured to convert the induced alternating current into a direct current so as to supply power to modules inside the controller 7; and determine a real-time rotational speed of the motor body 1 according to an alternating frequency of the induced alternating current, and transmit the real-time rotational speed to the driver 2.

The driver 2 may be further configured to modify the driving instruction according to the received real-time rotational speed, and send the modified driving instruction to the motor body 1.

It should be noted that the motors mentioned in the present application are all electric motors (commonly known as Motor), preferably alternating current motors.

It should also be noted that, the electrical connection mentioned in the present application may be a direct electrical connection or an indirect electrical connection, which is not limited herein.

In this embodiment, the motor body 1 mainly includes a stator 101, a rotor 102, a front end cover 104, and a rear end cover 105, where a rotor magnet 103 is externally attached to or inserted into the rotor 102.

In this embodiment, the driving instruction may be autonomously sent by the driver 2 to the motor body 1, and may also be sent by the driver 2 in response to a driving signal sent by an upper computer 10. The specific sending manner of the driving instruction may be set according to a model of the driver 2.

In this embodiment, the specific type of the driver 2 may be flexibly set by those skilled in the art. For example, the driver 2 may be a direct current driver, or an alternating current driver, and it may be a synchronous driver, or an asynchronous driver. There is no any limitation on this herein.

In this embodiment, the driver 2 may be provided in a power distribution room, and the controller 7 may be provided on or near the motor body 1. An input end of the driver 2 can be connected to a power bus, and an output end of the driver 2 is connected to the motor body 1 through the power cable 8, so as to supply power to the motor body 1 and transmit the driving instruction to the motor body 1.

In this embodiment, the head and the tail of the induction coil 13 may be electrically connected to the controller 7 through two connection wires 9, respectively, and the connection wires 9 may be conductive copper wires.

In this embodiment, the induced alternating current generated by the induction coil 13 when the motor body 1 rotates is an alternating current. The controller 7 may, on one hand, convert the induced alternating current into the direct current, so as to supply power to the modules inside the controller 7, and may, on the other hand, determine the real-time rotational speed of the motor body 1 according to the alternating frequency of the induced alternating current, and transmit the real-time rotational speed to the driver 2, i.e., replacing the function of the encoder.

In this embodiment, the controller replaces a conventional encoder structure and may be configured to determine the real-time rotational speed of the motor body and transmit the real-time rotational speed to the driver, so that the driver can modify the driving instruction according to the received real-time rotational speed and transmit the modified driving instruction to the motor body, thereby completing the closed-loop control of the motor body. Furthermore, the induction coil has been further added to the stator winding in the cloud motor, the induction coil can generate the induced alternating current when the motor body rotates and transmit the induced alternating current to the controller, and the controller can convert the induced alternating current into the direct current so as to supply power to the modules inside the controller. By means of such an arrangement, the power supply problem of the controller can be solved without need of providing a long-distance power cable between the controller and the driver, thereby avoiding the problems of the installation disorder and data transmission interference caused by the long-distance power cable on the motor. Still furthermore, the controller may also determine the real-time rotational speed of the motor body according to the alternating frequency of the induced alternating current, so as to replace the function of the encoder and realize accurate monitoring of the motor body, thereby enabling the driver to modify the driving instruction according to the real-time rotational speed of the motor body, and achieving the closed-loop control from the driver to the motor body, from the motor body to the controller, and from the controller to the driver.

In a possible embodiment, the controller 7 may include a power module 71, a rectification module 72 and an alternating-frequency conversion module 73, where the power module 71 is electrically connected to the induction coil 13, and the power module 71 is electrically connected to the rectification module 72 and the alternating-frequency conversion module 73, respectively.

The power module 71 may be configured to transmit the induced alternating current to the rectification module 72 and the alternating-frequency conversion module 73, respectively.

The rectification module 72 may be configured to convert the received induced alternating current into the direct current, and use the direct current to supply power to the controller 7, or to supply power to the controller 7 and an alternating-current electric device connected to the rectification module 72.

The alternating-frequency conversion module 73 may be configured to determine a real-time rotational speed of the motor body 1 according to the alternating frequency of the received induced alternating current, and transmit the real-time rotational speed to the driver 2, so as to achieve a closed-loop control of the cloud motor.

In this embodiment, the head and the tail of the induction coil 13 may be electrically connected to the controller 7 through two connection wires 9, respectively, and serve as positive and negative terminals of a power input of the controller 7. The power module 71 may be a region where the two connection wires 9 of the induction coil 13 are connected to the controller 7, and has the function of receiving current and distributing and transmitting the current.

In this embodiment, the rectification module 72 is similar to a triode structure, and may be rectified the input inducted alternating current with an unstable voltage into a current with a stable voltage. The specific structure of the rectification module 72 may refer to the related prior art, and will not be repeated herein.

In this embodiment, the alternating-current electric device may be a light, a fan and other alternating-current electric appliances connected to the rectification module 72, which is not limited herein.

In this embodiment, the alternating frequency of the induced alternating current changes continuously and the alternating-frequency conversion module 73 can accurately determine the real-time rotational speed of the motor body 1 according to the alternating frequency of the induced alternating current, which has a better rotational speed detection effect compared with conventional encoders.

In this embodiment, the power module in the controller can receive the induced alternating current transmitted by the induction coil, and transmit the induced alternating current to the rectification module and the alternating-frequency conversion module, respectively; the rectification module can rectify the induced alternating current with an unstable voltage into the direct current with a stable voltage, so as to supply power to various modules in the controller, thereby preventing the controller from being externally connected to a long-distance power supply cable; and the alternating-frequency conversion module can accurately determine the real-time rotational speed of the motor body according to the alternating frequency of the induced alternating current, thereby replacing a traditional encoder, having a better detection accuracy than the encoder, and ensuring the closed-loop control of the motor.

In a possible embodiment, the controller 7 can further include a data transceiver module 74, the data transceiver module 74 is electrically connected to the alternating-frequency conversion module 73, and the data transceiver module 74 is further in communication connection with a cloud server/upper computer 10, both of which are in communication connection with the driver 2.

The alternating-frequency conversion module 73 may be specifically configured to transmit the real-time rotational speed to the cloud server/upper computer 10 through the data transceiver module 74, and the cloud server/upper computer 10 sends the real-time rotational speed to the driver 2.

In this embodiment, the data transceiver module 74 may be a communication module that can perform data transmission, and it can perform communication through a network (4G, 5G, a local area network, etc.). The cloud server may be a cloud server of the local area network, such as a cloud server of a certain factory area.

In this embodiment, the driver may be in communication connection with the cloud server/upper computer, so as to perform data interaction between the driver and the cloud server/upper computer.

In this embodiment, the alternating-frequency conversion module can transmit the real-time rotational speed of the motor to the cloud server/upper computer through the data transceiver module, and the cloud server/upper computer sends the real-time rotational speed to the driver. By means of such an arrangement, the data transmission between the controller and the driver can be ensured while the data cable is prevented from being provided between the controller and the driver, thereby avoiding the installation disorder and data transmission interference caused by the long-distance data cable on the motor.

In a possible embodiment, the alternating-frequency conversion module 73 and the data transceiver module 74 can also be electrically connected to the rectification module 72, respectively, and the rectification module 72 can be configured to supply power to the alternating-frequency conversion module 73 and the data transceiver module 74.

In this embodiment, the time required for the rectification module to convert the alternating current into the direct current and use the direct current to supply power to the alternating-frequency conversion module is very short, which is usually on the order of millisecond, and does not affect the detection of the real-time rotational speed of the motor body by the alternating-frequency conversion module when the motor body starts to rotate.

In this embodiment, the rectification module may supply power to the alternating-frequency conversion module and the data transceiver module by using the direct current, so as to prevent the controller from being externally connected to a long-distance power supply cable.

In a possible embodiment, the cloud motor can further include a plurality of sensors 11, the plurality of sensors 11 are each electrically connected to the rectification module 72, and the rectification module 72 may be further configured to supply power to the plurality of sensors 11, respectively. The plurality of sensors 11 may also be in communication connection with the cloud server/upper computer 10, respectively, and the plurality of sensors 11 may be configured to upload collected data to the cloud server/upper computer 10.

In this embodiment, the sensors may be various sensors such as a temperature sensor, a humidity sensor, and a pressure sensor. The types and quantities of sensors can be flexibly set by those skilled in the art, and is not limited herein.

In this embodiment, the rectification module may supply power to each of the plurality of sensors in the cloud motor by using the direct current, thereby avoiding installation disorder and data transmission interference caused by providing a long-distance power cable for the sensors on the motor. In addition, the plurality of sensors may also be in communication connection with the cloud server/upper computer, respectively, and transmit the collected data in a wireless communication manner, thereby avoiding installation disorder and data transmission interference caused by providing a long-distance power cable for the sensors on the motor.

In a possible embodiment, the alternating-frequency conversion module 73 can also be connected to the driver 2 through a first data cable, and the alternating-frequency conversion module 73 can be specifically configured to transmit the real-time rotational speed to the driver 2 through the first data cable

In this embodiment, the alternating-frequency conversion module may further transmit the real-time rotational speed to the driver through the first data cable, thereby reducing the cost of data transmission.

In a possible embodiment, the controller 7 can further include a display module 75, the display module 75 may be connected to the alternating-frequency conversion module 73 through a second data cable, the display module 75 is further electrically connected to the rectification module 72, and the rectification module 72 may further be configured to supply power to the display module 75; and the display module 75 may be configured to receive and display the real-time rotational speed transmitted by the alternating-frequency conversion module through the second data cable.

In this embodiment, the display module 75 may include a display screen that can display text information, image information, etc.

Exemplarily, the controller may be provided on a junction box of the motor, and a display screen of the display module faces outwards. During in use, the image on the display screen may be kept facing upwards according to the installation manner of the motor.

In this embodiment, the controller further includes the display module, and the display module is configured to display the real-time rotational speed of the motor so as to facilitate being observed by relevant personnel.

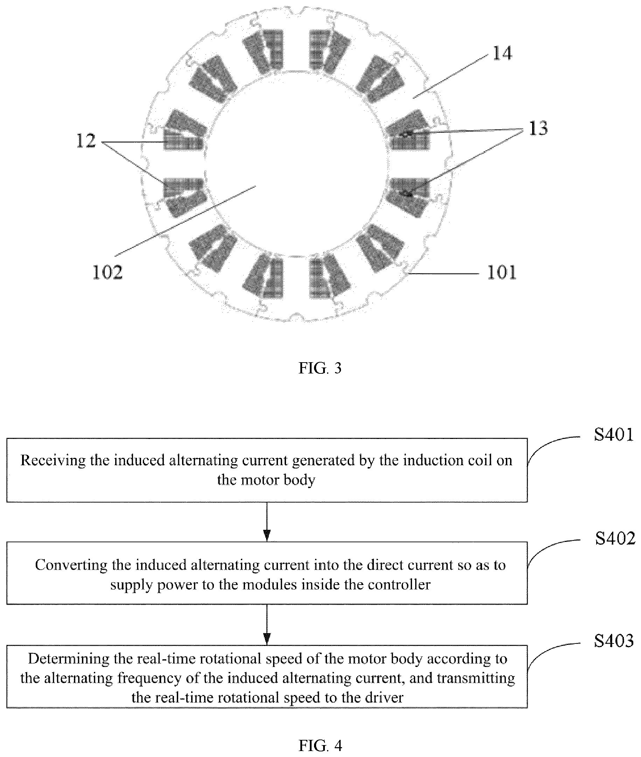

In a possible embodiment, FIG. 3 is a schematic structural diagram of a motor body according to an embodiment of the present application. As shown in FIG. 3, the motor body 1 can further include a rotor 102 and a stator 101 provided around an outer side of the rotor 102, where the stator 101 includes a plurality of groups of stacked silicon steel sheets 14, and a stator winding 12 is wound around an outer periphery of each group of silicon steel sheets 14. The induction coil 13 is wound on one or more stator windings 12, and a wire diameter and a quantity of turns of the induction coil 13 are both positively correlated with the current generated by the induction coil 13.

In this embodiment, the motor body may include structures such as a motor housing, a stator, a rotor, a shaft, a bearing, and front and rear end covers. The stator may be formed by stacking silicon steel sheets, and one group of copper wire windings are wound around the silicon steel sheets to form the stator winding. The rotor is also formed by stacking silicon steel sheets, and a permanent magnet is attached to or inserted into the rotor.

In this embodiment, the voltage generated by the induction coil is directly proportional to the rotational speed of the motor and a quantity of poles of the motor; and the current generated by the induction coil is directly proportional to the magnetic energy product of the magnet of the motor rotor and directly proportional to the wire diameter and the quantity of turns of the induction coil. Therefore, the wire diameter and the quantity of turns of the induction coil can be calculated according to the current and the voltage required by the controller and the sensors.

In this embodiment, the induction coil may be wound around one or more stator windings of the motor body, and when the motor body rotates, the induction coil moves to cut the magnetic field lines of the permanent magnet in the rotor to generate an induced electromotive force and an induced alternating current, thereby achieving self-power generation. Furthermore, the current and voltage generated by the induction coil can be adjusted by adjusting the line diameter and the quantity of turns of the induction coil.

In a possible embodiment, when there is only one induction coil, the one induction coil 13 is wound on one stator winding 12; and when there are a plurality of induction coils 13, each induction coil 13 is wound on one stator winding 12, and the plurality of induction coils 13 are connected in series, where a quantity of the induction coils 13 is positively correlated with the current generated by the induction coils 13, and does not exceed a quantity of the stator windings 12.

In this embodiment, one group of induction coils may be further added on one or more stator winding coils, or a plurality of groups of induction coils may be added and the added induction coils are connected in series, and then both ends of the induction coils are connected to the power module of the controller through the connection wires.

It should be noted that the induction coil and the stator winding cannot be connected, and need to be wound and led out separately.

In this embodiment, the quantity of the induction coils can be calculated according to the current and voltage required by the controller and the sensors, and thus it can be determined whether the induction coil is wound on one group of stator windings or a plurality of stator windings according to the wire diameter and the quantity of turns of the induction coil and a slot filling rate of the stator winding.

Preferably, the electric quantity required by the controller is usually not large, and adding one group of induction coils on one stator winding can meet the power supply requirement. Of course, when a large amount of electric quantity is required, one group of induction coils may also be added to each of the plurality of stator windings. Because the quantity of the stator windings is fixed, the quantity of induction coils provided thereon is also limited, that is, it cannot exceed the quantity of the stator windings 12.

In this embodiment, the current and voltage generated by the induction coils can be adjusted by adjusting the quantity of induction coils connected in series.

FIG. 4 is a flowchart of a control method for a cloud motor according to an embodiment of the present application. This embodiment illustrates the control method for the cloud motor by using the controller of the cloud motor as the executing entity. As shown in FIG. 4, the control method for the cloud motor may include the following steps.

S401: receiving an induced alternating current generated by the induction coil on the motor body.

In this embodiment, the controller may include a power module, a rectification module and an alternating-frequency conversion module, where the power module is electrically connected to the induction coil, and the power module is electrically connected to the rectification module and the alternating-frequency conversion module, respectively.

In this embodiment, the power module of the controller may be used to receive the induced alternating current generated by the induction coil, a head and a tail of the induction coil may be electrically connected to the controller through two connection wires, respectively, serving as positive and negative terminals of a power input of the controller, and the power module may be a region where two connection wires of the induction coil are connected to the controller, and has the function of receiving current and distributing and transmitting current.

In this embodiment, after receiving the induced alternating current generated by the induction coil, the power module may transmit the induced alternating current to the rectification module and the alternating-frequency conversion module, respectively.

S402: converting the induced alternating current into a direct current, so as to supply power to modules inside the controller.

In this embodiment, the rectification module of the controller may be used to rectify the induced alternating current with an unstable voltage into a current with a stable voltage, so as to supply power to various modules inside the controller.

S403: determining a real-time rotational speed of the motor body according to an alternating frequency of the induced alternating current, and transmitting the real-time rotational speed to the driver.

In this embodiment, the alternating-frequency conversion module of the controller can accurately determine the real-time rotational speed of the motor body according to the alternating frequency of the induced alternating current, thereby replacing a conventional encoder, having a better detection accuracy than the encoder, and ensuring the closed-loop control of the motor.

In this embodiment, the induction coil is added to the stator winding of the cloud motor, the induction coil can generate the induced alternating current when the motor body rotates and transmit the induced alternating current to the controller, and the controller can convert the induced alternating current into the direct current so as to supply power to the modules inside the controller. By means of such an arrangement, the power supply problem of the controller can be solved without providing a long-distance power cable between the controller and the driver, thereby avoiding the problems of the installation disorder and data transmission interference caused by the long-distance power cable on the motor. Furthermore, the controller may also determine the real-time rotational speed of the motor body according to the alternating frequency of the induced alternating current, so as to replace the function of the encoder and realize accurate monitoring of the motor body, thereby enabling the driver to modify the driving instruction according to the real-time rotational speed of the motor body, and achieving the closed-loop control from the driver to the motor body, from the motor body to the controller, and from the controller to the driver.

The application process of the cloud motor in the present application will be described below with reference to a specific embodiment.

In a specific embodiment, a set of dual-carbon intelligent motor is selected: a model of the bare motor is J5-100S-300R, a rotor iron core of the motor body has a length of 50 mm and a rated rotational speed of 300 rpm, and the motor body is composed of a stator, a rotor, a housing, a motor shaft, front and rear end covers, a bearing, and a junction box, and other structure. The motor stator is formed by splicing 27 coil windings of the stator, and the induction coil is formed by taking one coil winding of the stator and winding it with a copper wire with a diameter of 0.35 mm by 65 turns according to a winding direction of the stator. The head and the tail of the induction coil are led out and fixed in a junction box, installed on two terminal posts of the junction box, and connected to the power module in the controller of the motor. The controller is further provided with a rectification module, an alternating-frequency conversion module, a data transceiver module and a display module, where the power module is electrically connected to the rectification module and the alternating-frequency conversion module, respectively, the rectification module is electrically connected to the alternating-frequency conversion module, the data transceiver module and the display module, respectively, and the alternating-frequency conversion module is further respectively connected to the data transceiver module and the display module through the data cables.

The motor J5-100S-300R having the induction coil and the controller added to the motor body is compatible with a driver with model Q5-2.2R-380V, and a PLC is selected as the upper computer. A power supply input end of the driver is connected to a power bus, an output end of the driver is connected to three phases U, V and W of the motor body through the power cables, and the driver is also respectively connected to the motor body and the PLC through the data cables. The PLC is also in a communication connection with the data transceiver module.

When the upper computer PLC sends a driving signal to the driver through the data cable and the driver is used to start the motor at a certain rotational speed, the driver generates a driving instruction according to the driving signal and sends the driving instruction to the motor body through the data cable. The motor body starts to rotate at a preset rotational speed according to the driving instruction, the induction coil mounted on the stator winding of the motor body moves to cut the magnetic field lines of the permanent magnet in the rotor during the rotation process, generating an induced alternating current and an induced voltage, and transmits the induced alternating current to the power module of the controller through the connection wires, and the power module transmits the induced alternating current to the rectification module and the alternating-frequency conversion module, respectively.

On one hand, the rectification module converts the induced alternating current generated by the induction coil into the direct current, and uses the direct current to supply power to various modules of the controller and the sensors.

On the other hand, the alternating-frequency conversion module determines the real-time rotational speed of the motor body according to the alternating frequency of the received induced alternating current, and transmits the real-time rotational speed to the upper computer PLC via wireless communication through the data transceiver module. The PLC transmits the real-time rotational speed to the driver, and the driver modifies the driving instruction according to the received real-time rotational speed, and transmits the modified driving instruction to the motor body. In addition, the alternating-frequency conversion module also transmits the real-time rotational speed to the display module through the data cable, so that the display module receives and displays the real-time rotational speed of the motor body, so as to facilitate being observed by relevant personnel.

In the above embodiments, the description of each embodiment has its own emphasis, and for the parts not described in detail in a certain embodiment, reference may be made to the relevant description in other embodiments. The various technical features of the above-mentioned embodiments may be combined in any way. In order to make the description concise, not all possible combinations of the technical features in the above-mentioned embodiments have been described. However, as long as the combinations of these technical features are not contradictory, they should all be considered to fall within the scope of this specification.

Those skilled in the art will easily come up with other embodiments of the present application after considering the specification and practicing the invention disclosed herein. The present application is intended to cover any variations, uses, or adaptive changes of the present application, and these variations, uses, or adaptive changes follow the generic principles of the present application and include common general knowledge or customary technical means in the art not disclosed in the present application. The specification and embodiments are only considered exemplary, and the true scope of the present application is indicated by the appended claims.

It should be understood that the present application is not limited to the precise structures described above and shown in the accompanying drawings, and various modifications and changes may be made without departing from the scope thereof. The scope of the present application is limited only by the appended claims.

## Claims

1. A cloud motor, comprising: a motor body (1), a controller (7), and a driver (2), wherein the motor body (1) is connected to the driver (2) through a power cable (8);
the driver (2) is configured to send a driving instruction to the motor body (1), and the driving instruction is used to instruct the motor body (1) to rotate according to a preset rotational speed;
the motor body (1) comprises an induction coil (13) provided on a stator winding (12), a head and a tail of the induction coil (13) are both electrically connected to the controller (7), and the induction coil (13) is configured to generate an induced alternating current when the motor body (1) rotates and transmit the induced alternating current to the controller (7);
the controller (7) is configured to convert the induced alternating current into a direct current so as to supply power to modules inside the controller (7); and determine a real-time rotational speed of the motor body (1) according to an alternating frequency of the induced alternating current, and transmit the real-time rotational speed to the driver (2); and
the driver (2) is further configured to modify the driving instruction according to the received real-time rotational speed, and send the modified driving instruction to the motor body (1).

2. The cloud motor according to claim 1, wherein the controller (7) comprises a power module (71), a rectification module (72) and an alternating-frequency conversion module (73), wherein the power module (71) is electrically connected to the induction coil (13), and the power module (71) is electrically connected to the rectification module (72) and the alternating-frequency conversion module (73), respectively;
the power module (71) is configured to transmit the induced alternating current to the rectification module (72) and the alternating-frequency conversion module (73), respectively;
the rectification module (72) is configured to convert the received induced alternating current into the direct current, and use the direct current to supply power to the controller (7), or to supply power to the controller (7) and an alternating-current electric device connected to the rectification module (72); and
the alternating-frequency conversion module (73) is configured to determine the real-time rotational speed of the motor body (1) according to the alternating frequency of the received induced alternating current, and transmit the real-time rotational speed to the driver (2), so as to achieve a closed-loop control of the cloud motor.

3. The cloud motor according to claim 2, wherein the controller (7) further comprises a data transceiver module (74), wherein the data transceiver module (74) is electrically connected to the alternating-frequency conversion module (73), the data transceiver module (74) is further in a communication connection with a cloud server/upper computer (10), and the cloud server/upper computer (10) are in a communication connection with the driver (2); and
the alternating-frequency conversion module (73) is specifically configured to transmit the real-time rotational speed to the cloud server/upper computer (10) through the data transceiver module (74), and the cloud server/upper computer (10) sends the real-time rotational speed to the driver (2).

4. The cloud motor according to claim 3, wherein the alternating-frequency conversion module (73) and the data transceiver module (74) are further respectively electrically connected to the rectification module (72), and the rectification module (72) is configured to supply power to the alternating-frequency conversion module (73) and the data transceiver module (74).

5. The cloud motor according to claim 4, wherein the cloud motor further comprises a plurality of sensors (11), the plurality of sensors (11) are each electrically connected to the rectification module (72), and the rectification module (72) is further configured to supply power to the plurality of sensors (11), respectively; and
the plurality of sensors (11) are each also in communication connection with the cloud server/upper computer (10), and the plurality of sensors (11) are configured to upload collected data to the cloud server/upper computer (10).

6. The cloud motor according to any one of claims 2-5, wherein the alternating-frequency conversion module (73) is further connected to the driver (2) through a first data cable, and the alternating-frequency conversion module (73) is specifically configured to transmit the real-time rotational speed to the driver (2) through the first data cable.

7. The cloud motor according to any one of claims 2-5, wherein the controller (7) further comprises a display module (75), the display module (75) is connected to the alternating-frequency conversion module (73) through a second data cable, the display module (75) is further electrically connected to the rectification module (72), and the rectification module (72) is further configured to supply power to the display module (75); and
the display module (75) is configured to receive and display the real-time rotational speed transmitted by the alternating-frequency conversion module (73) through the second data cable.

8. The cloud motor according to any one of claims 1-5, wherein the motor body (1) further comprises a rotor (102) and a stator (101) provided around an outer side of the rotor (102), wherein the stator (101) comprises a plurality of groups of stacked silicon steel sheets (14), and the stator winding (12) is wound around an outer periphery of each group of silicon steel sheets (14); and
the induction coil (13) is wound on one or more stator windings (12), and a wire diameter and a quantity of turns of the induction coil (13) are both positively correlated with the current generated by the induction coil (13).

9. The cloud motor according to claim 8, wherein when there is only one induction coil (13), the one induction coil (13) is wound on one stator winding (12); and
when there are a plurality of induction coils (13), each induction coil (13) is wound on one stator winding (12), and the plurality of induction coils (13) are connected in series, and a quantity of the induction coils (13) is positively correlated with the current generated by the induction coils (13), and does not exceed a quantity of the stator windings (12).

10. A control method for the cloud motor according to any one of claims 1-9, applied to the controller (7) of the cloud motor, the method comprising:
receiving (S401) the induced alternating current generated by the induction coil on the motor body; and
converting (S402) the induced alternating current into the direct current so as to supply power to the modules inside the controller; and determining (S403) the real-time rotational speed of the motor body according to the alternating frequency of the induced alternating current, and transmitting the real-time rotational speed to the driver.
